# EUROPEAN PATENT SPECIFICATION

(11) **EP 3 792 224 B1**
(45) Date of publication and mention of the grant of the patent: **02.08.2023**
(21) Application number: 20382734.0
(22) Date of filing: 07.08.2020
(51) Int. Cl.: C02F 1/68, C02F 1/56

(54) **EQUIPMENT FOR PREPARING AND DOSING LIQUID POLYELECTROLYTES**
AUSRÜSTUNG ZUR HERSTELLUNG UND DOSIERUNG VON FLÜSSIGEN POLYELEKTROLYTEN
ÉQUIPEMENT POUR LA PRÉPARATION ET LE DOSAGE DE POLYÉLECTROLYTES LIQUIDES

(30) Priority: 16.09.2019 ES 201930799
(43) Date of publication of application: 17.03.2021
(73) Proprietor: Dosage, S.L, 03013 Alicante (ES)
(72) Inventor: Vázquez Catalán, Félix, 03013 ALICANTE (ES); Lloret Segovia, Jaime Miguel, 03013 ALICANTE (ES)
(74) Representative: Temiño Ceniceros, Ignacio

(56) References cited:
- EP-A1- 3 177 572
- EP-B1- 3 177 572
- CN-A- 107 670 577
- US-A1- 2005 121 377
- US-A1- 2015 190 766
- US-B2- 8 905 627

## Description

### Field of the invention

The invention consists of a new type of equipment for preparing and dosing polyelectrolytes in liquid state, consisting of a compact set of equipment wherein the necessary dosage of water and concentrated flocculant is achieved, by means of a hydraulic injector, which performs a premixing, which is introduced into a tank with stirring, wherein polyelectrolytes which are already diluted and activated are generated and extracted in a controlled manner for the application thereof.

The invention falls within the different types of equipment related to the treatment of waste water and potable water, and the physical and chemical processes of the different components which are used in said treatments, and specifically the invention consists of a set of equipment for preparing and dosing polyelectrolytes.

### State of the art

Different methods and processes for obtaining polyelectrolytes are known within this industrial sector. By way of non-limiting example, the following are known: processes for producing polyelectrolytes starting from the application of microwave radiation on an aqueous solution; methods for preparing watersoluble polyelectrolytes by means of photopolymerisation; or processes for treating contaminated water such as sewage and waste water of domestic or industrial origin, or material leached from a waste material or a landfill site, introducing several agents into the tanks of a water treatment system, this addition being able to be controlled or not.

In any case, polyelectrolytes or flocculants, which are used in water purification, are usually synthesised by means of the polymerisation of one or more monomers, generating polymers with a very high molecular weight and with a very high polymer concentration.

This fact means that before the use of the flocculant, as an additive in order to bind the suspended matter (floccular matter), a correct dissolution of the polyelectrolyte in water is necessary, with a certain concentration and a minimum homogeneity. This process is called the activation/preparation of the flocculant.

While flocculants can be presented in solid or liquid form, the invention focuses on the preparation of liquid flocculants which, despite having a lower polymer concentration than the solid products, it is also necessary to dilute and/or activate them before the application thereof as flocculants.

In this sense, what is disclosed in document US5372421 is known, wherein it describes a set of equipment for preparing a polymer intended for water treatment, wherein there is a premixing, but it starts from a solid polymer, with which it requires an inlet collector wherein it is mixed with water requiring different means than that of the present invention, wherein the polymer is liquid and therefore is initially treated differently.

What is disclosed in document JP2001026650A is also known, wherein it describes a set of equipment for preparing a polymer for water treatment, wherein the polymer, as in the previous case, is also solid, therefore, before the dispersion in water it requires a prior treatment, passing through a hopper and/or grinding it, with which in the equipment itself differs from that of the present invention wherein the polymer is liquid.

Document US5344619 discloses equipment that also starts from the contribution of a solid and dry polymer for water treatment. As in the previous cases, the equipment consists of means differing from those of the present invention.

Document US20050121377 discloses a specific equipment for mineral-type flocculants, based on a solution of silica and a metal salt in an acid medium. This apparatus is not applicable for the preparation of polymer type-flocculants.

Document EP3177572 discloses a system with a different structure and wherein it is not solved the problem of the stability of the water/flocculant ratio. Document CN10787057 discloses an apparatus directed to supply food to animals, where the food is added to the agitation tank through a Venturi system, with respect to the flow of water. Normally, the purification stations are designed to work with a continuous influent flow and therefore it is essential to dose the necessary additives in a controlled manner as well. This fact is especially sensitive in the dosage of the flocculant, which due to the primary role thereof in purification and the technical difficulties posed by the handling of the polymers, makes the flocculant preparing/dosing machine an essential part for the correct operation of the WWTP. Further relevant prior art documents are US 2015/190766 A1 and US 8 905 627 B2.

Taking into account these aspects and the known equipment, the present invention, compared to these types of polyelectrolyte generation and within the field of wastewater treatment, has a compact set of equipment for preparing polyelectrolytes which are subsequently used in this type of treatment, wherein the equipment is adapted for suctioning liquid flocculants, which enables a controlled premixing (in concentration) of the water and the flocculant, which is not known and possible with current equipment, subsequently the mixture ends up maturing in a tank with a stirrer, and from wherein the generated polyelectrolyte is automatically extracted. To do so, the incorporation of an adapted hydraulic injector and other means of managing the mixture is essential.

Until now, as seen in these three documents comprised in the state of the art, the existing equipment uses two independent inlet lines for water and flocculant in solid state, to the tank with stirring, each one with the independent pumping system thereof. This fact means that due to pressure/flow variations in the water inlet and/or problems with contamination and/or maintenance of the solid flocculant dosing machine, the proportion of water/polymer in the preparation is not usually constant and therefore problems appear in the purification operation.

Therefore, the present invention consists of solving the problems previously indicated existing in the generation of polyelectrolytes that are used in water treatment and which starts from a premixing starting from a solid polymer, and is achieved in a controlled manner by a set of automatic equipment wherein an exact dosage is achieved, wherein it is controlled that the mixing, stirring and time are correct, and wherein it has control over the polyelectrolyte generated being exactly what is necessary for the use that it will have, something that with known means cannot be obtained. This equipment in turn improves and optimises the polyelectrolyte production process in comparison with known equipment and means, wherein said process is not controlled, thereby reducing energy consumption, reducing the time required, and increasing the yield of the optimal final product produced. All of this is based on being able to start the process with a liquid polymer and this requires a reconfiguration of the structure of the equipment compared to known equipment.

Taking into account the known systems and equipment, it is considered that the present invention provides a solution to the technical problems previously detailed and existing in this industrial field, and wherein the invention consists of a set of equipment for constant and homogeneous preparation in the concentration of water with the liquid polymer, which enables a constant dosage that can be regulated, and with which the preparation of flocculants with a high molecular weight in liquid state is optimised and improved.

### Description of the Invention

As previously mentioned, in order to solve the technical problems of the water treatment equipment, the present invention starts from the contribution of a liquid polymer. Given that the known equipment does not start from said initial premise, and since none of the known equipment is designed and/or enables the initial contribution of a liquid polymer, the present invention requires a restructuring of the internal composition thereof, and in this sense, the equipment comprises a hydraulic injector which suctions the polymer, in a proportional and regulable manner, thanks to the water pressure required for preparing the polyelectrolyte, such that the problem of variations in pressure and/or flow rate of water, which are common in installations, is solved.

This injector could not be installed in the equipment known within the state of the art because in all the previous cases the equipment is based on the contribution of a solid polymer which, despite being ground, mixed with liquids or other prior actions, which prevents the use of injectors, and which always ends up requiring an initial line independent from that of the water. The present invention makes it possible to start the process with an initial contribution already mixed in a liquid state, which not only enables time and costs to be reduced, but also prevents the final problems common in purification plants due to contamination and/or maintenance of the dosing machine.

The mentioned injector enables a premixing of the water and the polymer, something which is not known, reducing the hydraulic resistance time necessary for dilution and heterogeneous mixing. Furthermore, due to this premixing which flows into the tank with stirring, the necessary volume of said tank is reduced. Moreover, the use of this hydraulic injector enables the placement of (mechanical) shut-off elements, for example, a float, which prevents spills and accidents in case of electromechanical failures. And finally, furthermore, in the event of a water shortage, this system prevents, unlike the known equipment, only polyelectrolyte from being dosed in the preparer, which generates enormous costs and further alters the final product.

Taking these aspects into account, the equipment for preparing and dosing polyelectrolytes object of the present invention comprises:
- a hydraulic injector, with mixing regulation, from 0.5 to 5 %, adapted for liquid flocculants;
- a 300 L HDPE tank with PVC reinforcement in order to support the stirrer;
- an electric stirrer, with a 200 rpm reducer, a 316 stainless steel shaft and a propeller with 3 inclined blades;
- an electromechanical piston dosing machine, with 316 stainless steel head and max. capacity. 1000 L/h;
- an electronic board, comprising a control module, which electrically powers the equipment and organises the operation, and has manual and automatic control means;
- at least one pneumatic double-level probe;
- electrical power supply, three-phase Cetac;
- a hose for feeding concentrated flocculant;
- an outlet hose for the diluted flocculant; and
- a brass solenoid valve, 1.905 cm (3/4") female, for the inlet of tap water, which enables the assembly to operate in the event of any variation in the inlet pressure.

The objective of the equipment is to prepare and dose liquid polyelectrolytes with a very high molecular weight, specifically flocculants in emulsion or aqueous dispersions.

As mentioned above, the advantages of this equipment compared to the ones known is the stability it provides in the concentration of the preparation of the mixture of the polymer with water, essential for the correct application of the flocculants in purification systems. Furthermore, thanks to the system for dosing the preparation, with the piston pump, the dosage of the product can be adjusted to the needs of the treatment plant, something which is not possible with known means.

Additionally, the equipment has a large preparation flow rate capacity, up to 3000 L/h, for the dimensions it occupies. Furthermore, it is designed to be easily transported and installed in the most suitable place of the installation. The electrical board and safety systems prevent common problems in flocculant preparation and dosing plants, such as spills, breakdowns in the dosages due to a lack of water supply or power surges.

Furthermore, the equipment may comprise a spill prevention system with (mechanical) shut-off elements, for example a float, located in the tank.

Finally, the equipment can work automatically, dosing when an electrical signal (24V) from the treatment plant demands it, or manually with the remote controls of the electrical board itself.

It should be noted that, throughout the description and claims, the term "comprises" and its variants are not intended to exclude other technical features or additional elements.

### Brief description of the figures

In order to complete the description and to help a better understanding of the features of the invention, a set of figures and drawings is presented wherein the following is represented by way of illustration and not limitation:

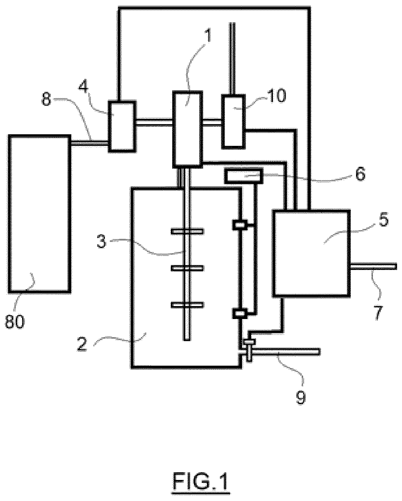

Figure 1 is a diagram of the different components of the equipment object of the present invention, wherein it highlights the presence of a hydraulic injector (1) from which a concentrated premixture of water and liquid flocculant comes out which enters the mixing tank (2), which comprises stirrers and sensors; said injector being fed by a solenoid valve (10) for the inlet of tap water, and a hose (8) for feeding liquid flocculant which communicates a secondary tank (80) of liquid flocculant with a stirring dosing pump (4) and the hydraulic injector (1); and wherein it also shows the existence of an electronic board (5) which comprises a control module for the operation of the equipment, which is in connection with the hydraulic injector (1), the dosing pump (4), the solenoid valve (10) and a valve of the outlet hose (9) for the final liquid product.

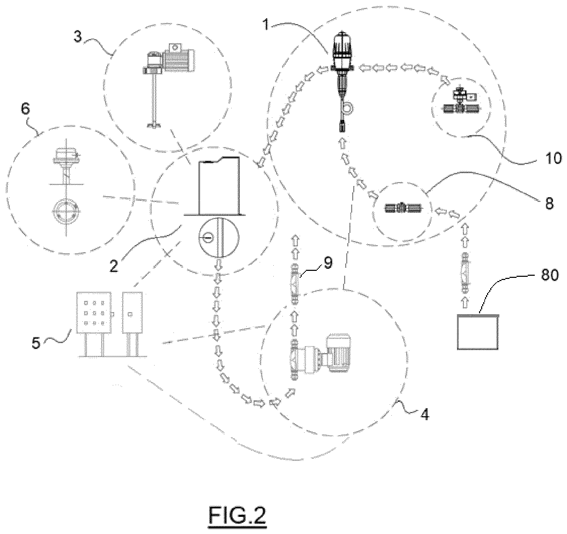

Figure 2 shows, in a schematic manner, the operation of the assembly of the equipment object of the invention, highlighting the inlet, independently, of water and flocculant into the hydraulic injector (1), the subsequent passage thereof to the tank (2), and the outlet of the final liquid product.

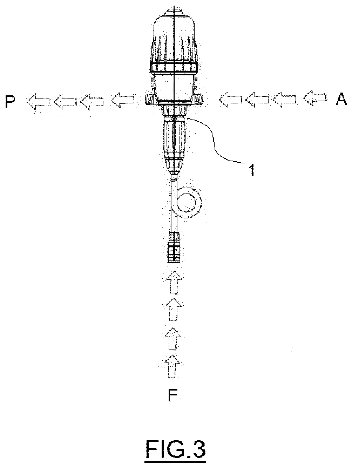

Figure 3 is an enlarged view of the hydraulic injector (1), wherein it shows that it has an inlet for water (A), and another independent inlet for liquid flocculant (F), and from wherein a concentrated premixing (P) of both products comes out.

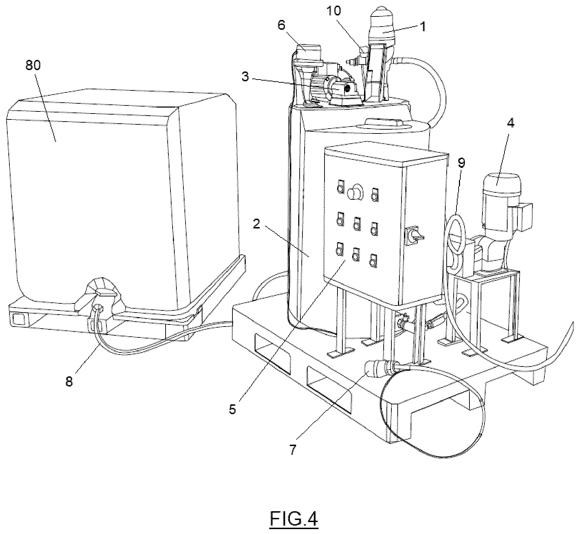

Figure 4 is an external view of a set of equipment wherein the previously indicated components are seen.

### Detailed description of an embodiment of the invention

Taking into account the previous figures, it can be seen that in one embodiment of the invention, the equipment is located on a support (S) comprising:
- a hydraulic injector (1), with regulation of the premixing of water and concentrated liquid flocculant;
- a HDPE tank (2) with PVC reinforcement in order to support a stirrer;
- an electric stirrer (3), with a reducer, a stainless-steel shaft and a propeller with inclined blades;
- an electromechanical piston dosing pump (4), with stainless steel head and max. capacity of 1000 L/h;
- an electronic board (5), comprising a control module, which electrically powers the equipment and organises the operation, and has manual and automatic control means;
- at least one pneumatic double-level probe (6);
- an electrical power supply by means of a three-phase plug (7);
- a hose (8) for feeding concentrated flocculant which communicates a secondary tank (80) of flocculant with the dosing pump (4) and the injector (1);
- an outlet hose (9) for the diluted flocculant with an outlet valve and connected to a pump, being located in the lower portion of the tank (2); and
- a brass solenoid valve (10) for the inlet of tap water.

The operation of the equipment is such that when a solenoid valve (10) is opened, tap water (A) enters, with a pressure which makes the hydraulic injector (1) work and also suctions a liquid flocculant (F), by means of the movement of an internal plunger which follows a vertical path inside a cylinder, this movement is produced thanks to a set of internal valves which direct the flow of water inside the injector causing the movement of the plunger, therefore, the movement of the plunger regulates the suction of the product and the speed of the plunger will always be proportional to the flow rate of water circulating through the injector. It is worth mentioning that the proportion of water and flocculant can be regulated by adjusting the length of the path that the plunger travels. The suction is performed by a hose (8) which communicates the secondary tank (80) wherein the liquid flocculant is stored with the dosing pump (4) and the injector (1). Therefore, the hydraulic injector (1) independently receives water (A) and flocculant (F), generating an initial premixing (P).

A premixture of water and liquid flocculant comes out of the hydraulic injector (1) which enters a tank (2) with stirring, in other words, that unlike the known equipment wherein the solid flocculant is mixed with the water already in the tank (2), in the present invention the tank (2) already receives a premixed liquid product, which makes it possible to obtain the technical improvements indicated throughout the specification and with which the usual technical problems in this equipment are also solved, and with which the final liquid polyelectrolyte is obtained.

The concentration of the water-flocculant mixture is adjustable, with a screw which can be regulated located in the hydraulic injector (1), it can be adjusted from 0.5% to 5% according to the characteristics of the liquid flocculant and the needs of the plant.

If the level detected by a flocculant preparation probe (6) in the tank (2) marks a pre-programmed minimum in the electronic board (5), the solenoid valve (10) opens in order for water to enter. While water is entering, the hydraulic injector (1) suctions liquid flocculant through the hose (8).

When the level detected by the probe (6) marks the pre-programmed maximum level, the solenoid valve (10) closes and the water and flocculant are no longer supplied.

Whenever the equipment is running, the stirrer (3) is on, diluting the flocculant in the water inside the tank (2).

If the minimum level detected by the probe (6) is not recovered within a pre-programmed and adjustable time in the electronic board (5), the stirrer (3) and the dosing pump (4) stop in order to prevent breakdowns. When the minimum level is recovered, they start up again.

This level control system controlled from a board is not known in any type of equipment related to this industrial field. In other words, the level detected by the double probe (6) (double signal: minimum and maximum level), makes the solenoid valve (10) open when it marks the minimum and close when it indicates the maximum. By opening and closing this valve (10), the inlet of water and flocculant is controlled simultaneously, maintaining the proportionality. At the same time, the minimum level is regulated with the double-signal level probe (6), being adjusted so that there is a sufficient volume so that the preparation does not run out while the tank is being refilled (2). In other words, the minimum level is calibrated according to the flow rate of the inlet of water and the consumption of preparation, the minimum level normally being left at about 50 litres. In other words, the minimum volume of mixture contained in the tank (2) is between 15-20 % of the capacity of the tank.

Moreover, the prepared/diluted flocculant is extracted with a pump, which is activated when the corresponding remote control is activated, in the electronic board (5), to the manual position or the mentioned remote control is in automatic mode and the electrical signal arrives which activates the dosing pump (4), in other words, the demand of the treatment plant. If the board marks the minimum level, this pump (4) does not operate until the level of preparation in the tank (2) is recovered.

The preparation is dosed with a pump to the treatment plant, at the flocculation point established and pre-programmed in the electronic board (5), which it reaches through the outlet hose (9). The dosing can be manual, with the remote control on "manual" in the electronic board (5) or automatic with the remote control in the "automatic" position in the board (5). The signal that manages the stopping and starting of the automatic position comes from the treatment plant and is a 24V electrical signal.

It is also noted that, as initially commented, the equipment is located on a support, which can be have multiple shapes or configurations, for example, it can be a pallet made of wood or any other material, which enables it to be easily located and transported, being able to in turn comprise other elements such as wheels in the base, or perimeter stops, all of these intended to improve the support and transport of the assembly.

In this sense, the solenoid valve (10), the stirrer (3) and the dosing pump (4) can be managed from the electronic board (5) with three positions:
- Solenoid valve (10): Man-->closed/open according to the level (6); 0->Closed; Aut-->closed/open according to the level
- Stirrer (3): Man --> always running; 0 --> stopped; Aut --> running as long as there is a level marked in the probe (6)
- Dosing pump (4): Man --> always running; 0 --> stopped; Aut --> running whenever requested by the electrical signal and there is a level marked in the preparation probe (6).

Finally, an embodiment of the equipment object of the present invention comprises the following connections:
Tap water connection through the 1.905 cm (3/4") female solenoid valve (10).

Electrical connection through a male 380 V three-phase plug (7).

Connection of the flocculant prepared starting from the female 2.54 cm (1") dosing pump outlet (4), it being recommended to connect a 25 mm φ outlet hose (9) to the treatment plant.

Connection of the concentrated flocculant injector starting from a 15/21 mm φ hose (8) with a threaded 5.08 cm (2") Camlock-plug connection or suction end hose with a non-return valve.

## Claims

1. Equipment for preparing and dosing liquid polyelectrolytes, which is compact and transportable, comprising a hydraulic injector (1) wherein an initial premixing (P) of water (A) and flocculant (F) is generated wherein said concentrated premixture of water and flocculant comes out of the injector and enters into a mixing tank (2), wherein said tank (2) comprises an electric stirrer (3); the equipment also comprising an electromechanical dosing pump (4) and an outlet hose (9) of the liquid polyelectrolyte or diluted flocculant with an outlet valve and connected to the pump; wherein the equipment is **characterised in that**:
the hydraulic injector (1) comprises a cylinder and a set of internal valves of independent inlet of water and liquid polymer flocculant into de cylinder, being the injector (1) fed by a solenoid valve (10) for the inlet of water (A) and a hose (8) for the inlet of liquid flocculant (F) communicating with a secondary tank (80) of liquid flocculant (F); wherein the cylinder comprises an internal plunger which follows a vertical path inside the cylinder when the set of internal valves direct a flow of water inside the injector,
and wherein said movement of the plunger regulates the suction of the flocculant from the hose (8), being the proportion of water and flocculant regulated by adjusting the length of the path of the plunger inside the cylinder and being the speed of the plunger proportional to the flow rate of water circulating through the injector;
wherein the tank (2) comprises at least one probe (6) with a double level detection of the flocculant preparation for the maximum and minimum level, being the probe (6) in connection with an electronic board (5) for entering water into the injector (1); and
wherein the electronic board (5) comprises a control module for the operation of the equipment, being in connection with the probe (6), the hydraulic injector (1), the dosing pump (4), the solenoid valve (10), and the electric stirrer (3) and comprising manual and automatic control means for the dosing and outlet of the liquid polyelectrolyte.

2. The equipment for preparing and dosing polyelectrolytes, according to claim 1, wherein the hose (8) for feeding the liquid flocculant comprises a non-return valve.

3. The equipment for preparing and dosing polyelectrolytes, according to claim 1, wherein the dosing pump (4) has a capacity of up to 1000 L/h.

4. The equipment for preparing and dosing polyelectrolytes, according to claim 1, wherein the minimum volume of mixture detected by the probe (6) is a mixture contained in the tank (2) of between 15-20% of the capacity of the tank.

5. The equipment for preparing and dosing polyelectrolytes, according to claim 1, wherein the tank (2) comprises an anti-spill prevention system with at least one mechanical shut-off element.

6. The equipment for preparing and dosing polyelectrolytes, according to claim 5, wherein the shut-off element is a float.

## Patentansprüche

1. Einrichtung zur Herstellung und Dosierung von flüssigen Polyelektrolyten, die kompakt und transportabel ist, umfassend einen hydraulischen Injektor (1), wobei ein anfängliches Vorgemisch (P) aus Wasser (A) und Flockungsmittel (F) erzeugt wird, wobei das konzentrierte Vorgemisch aus Wasser und Flockungsmittel den Injektor verlässt und in einen Mischtank (2) eintritt, wobei der Tank (2) ein elektrisches Rührwerk (3) umfasst; wobei die Einrichtung auch eine elektromechanische Dosierpumpe (4) und einen Auslassschlauch (9) für den flüssigen Polyelektrolyten oder das verdünnte Flockungsmittel mit einem Auslassventil und der mit der Pumpe verbunden ist, umfasst; wobei die Einrichtung **dadurch gekennzeichnet ist, dass**:
der hydraulische Injektor (1) einen Zylinder und ein Satz von internen Ventilen für den unabhängigen Einlass von Wasser und flüssigem Polymerflockungsmittel in den Zylinder umfasst, wobei der Injektor (1) durch ein Magnetventil (10) für den Einlass von Wasser (A) und einen Schlauch (8) für den Einlass von flüssigem Flockungsmittel (F) gespeist wird, der mit einem Sekundärtank (80) von flüssigem Flockungsmittel (F) in Verbindung steht;
wobei der Zylinder einen inneren Kolben umfasst, der einem vertikalen Weg innerhalb des Zylinders folgt, wenn der Satz von inneren Ventilen eine Wasserströmung innerhalb des Injektors leitet, und wobei die Bewegung des Kolbens das Ansaugen des Flockungsmittels aus dem Schlauch (8) reguliert, wobei das Verhältnis von Wasser zu Flockungsmittel durch Einstellen der Weglänge des Kolbens innerhalb des Zylinders reguliert wird und wobei die Geschwindigkeit des Kolbens proportional zu der Strömmungsrate des durch den Injektor zirkulierenden Wassers ist;
wobei der Tank (2) mindestens eine Sonde (6) mit einer doppelten Füllstandserkennung der Flockungsmittelzubereitung für den maximalen und minimalen Füllstand umfasst, wobei die Sonde (6) in Verbindung mit einer elektronischen Platine (5) zum Eintreten von Wasser in den Injektor (1) steht; und
wobei die elektronische Platine (5) ein Steuermodul für den Betrieb der Einrichtung umfasst, das mit der Sonde (6), dem hydraulischen Injektor (1), der Dosierpumpe (4), dem Magnetventil (10) und dem elektrischen Rührwerk (3) in Verbindung steht und manuelle und automatische Steuermittel für die Dosierung und den Auslass des flüssigen Polyelektrolyten umfasst.

2. Einrichtung zur Herstellung und Dosierung von Polyelektrolyten nach Anspruch 1, wobei der Schlauch (8) zum Zuführen des flüssigen Flockungsmittels ein Rückschlagventil umfasst.

3. Einrichtung zur Herstellung und Dosierung von Polyelektrolyten nach Anspruch 1, wobei die Dosierpumpe (4) eine Kapazität von bis zu 1000 l/h aufweist.

4. Einrichtung zur Herstellung und Dosierung von Polyelektrolyten nach Anspruch 1, wobei das von der Sonde (6) erfasste Mindestvolumen des Gemischs ein in dem Tank (2) enthaltenes Gemisch von 15-20 % der Kapazität des Tanks ist.

5. Einrichtung zur Herstellung und Dosierung von Polyelektrolyten nach Anspruch 1, wobei der Tank (2) ein Auslaufschutzsystem mit mindestens einem mechanischen Absperrelement umfasst.

6. Einrichtung zur Herstellung und Dosierung von Polyelektrolyten nach Anspruch 5, wobei das Absperrelement ein Schwimmer ist.

## Revendications

1. Équipement de préparation et de dosage de polyélectrolytes liquides, qui est compact et transportable, comprenant un injecteur hydraulique (1) dans lequel un prémélange initial (P) d'eau (A) et de floculant (F) est généré dans lequel ledit prémélange concentré d'eau et de floculant sort de l'injecteur et entre dans un réservoir de mélange (2), dans lequel ledit réservoir (2) comprend un agitateur électrique (3) ; l'équipement comprenant également une pompe doseuse électromécanique (4) et un tuyau de sortie (9) du polyélectrolyte liquide ou du floculant dilué avec une vanne de sortie et relié à la pompe ; dans lequel l'équipement est **caractérisé en ce que :**
l'injecteur hydraulique (1) comprend un cylindre et un ensemble de vannes internes d'arrivée indépendante d'eau et de floculant polymère liquide dans le cylindre, l'injecteur (1) étant alimenté par une électrovanne (10) pour l'arrivée d'eau (A) et un tuyau (8) pour l'arrivée de floculant liquide (F) communiquant avec un réservoir secondaire (80) de floculant liquide (F) ;
dans lequel le cylindre comprend un plongeur interne qui suit un trajet vertical à l'intérieur du cylindre lorsque l'ensemble de vannes internes dirigent un écoulement d'eau à l'intérieur de l'injecteur, et dans lequel ledit mouvement du plongeur régule l'aspiration du floculant provenant du tuyau (8), la proportion d'eau et de floculant étant réglée en ajustant la longueur du trajet du plongeur à l'intérieur du cylindre et la vitesse du plongeur étant proportionnelle au débit d'écoulement d'eau circulant à travers l'injecteur ;
dans lequel le réservoir (2) comprend au moins une sonde (6) à double détection de niveau de la préparation de floculant pour le niveau maximal et minimal, la sonde (6) étant en relation avec une carte électronique (5) pour faire entrer de l'eau dans l'injecteur (1) ; et
dans lequel la carte électronique (5) comprend un module de commande pour le fonctionnement de l'équipement, étant en relation avec la sonde (6), l'injecteur hydraulique (1), la pompe de dosage (4), l'électrovanne (10), et l'agitateur électrique (3) et comprenant des moyens de commande manuelle et automatique du dosage et de la sortie du polyélectrolyte liquide.

2. Équipement de préparation et de dosage de polyélectrolytes, selon la revendication 1, dans lequel le tuyau (8) d'alimentation de floculant liquide comprend un clapet antiretour.

3. Équipement de préparation et de dosage de polyélectrolytes, selon la revendication 1, dans lequel la pompe de dosage (4) a une capacité allant jusqu'à 1 000 L/h.

4. Équipement de préparation et de dosage de polyélectrolytes, selon la revendication 1, dans lequel le volume minimal de mélange détecté par la sonde (6) est un mélange contenu dans le réservoir (2) compris entre 15 et 20 % de la capacité du réservoir.

5. Équipement de préparation et de dosage de polyélectrolytes, selon la revendication 1, dans lequel le réservoir (2) comprend un système antidéversement avec au moins un élément d'arrêt mécanique.

6. Équipement de préparation et de dosage de polyélectrolytes, selon la revendication 5, dans lequel l'élément d'arrêt est un flotteur.
